Europäisches Patentamt

European Patent Office

Office européen des brevets

(11) Publication number: **0 211 582**
A2

# (12) EUROPEAN PATENT APPLICATION

(21) Application number: 86305727.9

(22) Date of filing: 25.07.86

(51) Int. Cl.⁴: **G 02 B 6/16**
**G 02 B 27/14**

(30) Priority: 29.07.85 GB 8519087

(43) Date of publication of application:
25.02.87 Bulletin 87/9

(84) Designated Contracting States:
DE FR IT NL SE

(71) Applicant: The General Electric Company, p.l.c.
1 Stanhope Gate
London W1A 1EH(GB)

(72) Inventor: Boucouvalas, Anthony Christos
59 Sherwood Road
South Harrow Middlesex JA2 8AW(GB)

(72) Inventor: Georgiou, George Antony
45 Oakwood Avenue
South Gate London N14(GB)

(74) Representative: Kirby, Harold Victor Albert
Central Patent Department Wembley Office The General
Electric Company, p.l.c. Hirst Research Centre East Lane
Wembley Middlesex HA9 7PP(GB)

(54) Optical fibre filters.

(57) An optical fibre filter is produced by extending a depressed cladding or coaxial optical fibre (10) so that a portion held between clamps (16, 18) becomes tapered. The power transmitted through the fibre from a single frequency laser source (12) is detected and the drive to the clamps is stopped when the power reaches a pre-selected point for the desired filter characteristics.

*Fig. 2.*

EP 0 211 582 A2

0211582

HR/2725 EPC

## Optical Fibre Filters

The present invention relates to optical fibre filters.

An optical fibre normally has a relatively broad wavelength transmission characteristic. Depending upon the dimensions and refractive index profile of the fibre, there will be a cut-off wavelength beyond which the $HE_{21}$ mode will not propagate along the fibre. Shorter wavelengths will normally propagate and the loss of the fibre will vary according to the wavelength being transmitted.

In certain applications it would be desirable to selectively propagate only certain wavelengths. The present invention therefore relates to the technical problem of producing an optical fibre filter.

The present invention provides a method of producing an optical fibre filter comprising the steps of launching light energy of a single wavelength into an optical fibre, elongating a portion of the fibre while monitoring the power transmitted therethrough, and stopping the elongating process at a selected point of the transmitted power/elongation curve.

By appropriately selecting the point on the power/elongation curve, various filter characteristics can be produced. If the selected point on the power/elongation curve is the second or third minima, a band pass filter is produced, the pass band of which falls for successive minima.

The method is particularly advantageous in that it enables filters of different characteristics to be produced from an optical fibre without any strict fabrication requirement for the starting fibre.

The invention further provides apparatus for producing an optical fibre filter comprising a laser source producing radiation at a single wavelength for propagation along an optical fibre, means for elongating a portion of the fibre, means for monitoring the power transmitted along the fibre through the elongated portion, and means for controlling the elongating means in response to the output of the power monitoring means so as to stop the elongation at a predetermined point in the relationship between power and elongation.

Methods and apparatus according to the invention for producing an official fibre filter will now be described, by way of example only, with reference to the accompanying diagrammatic drawings in which:

Figure 1 is a diagram representing a plot of the power at a single wavelength transmitted through the core of an optical fibre as a portion of the fibre is elongated;

Figure 2 is a diagrammatic representation of the apparatus for producing an optical fibre filter; and

Figure 3 shows a number of plots of the transmission characteristics of optical fibre filters that may be produced by the method.

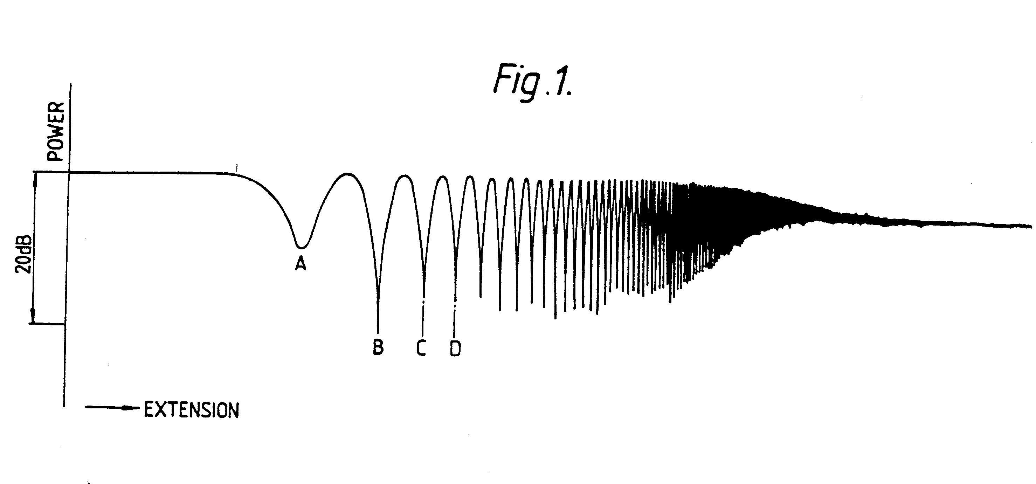

It is found that when radiation of a single wavelength is launched into a depressed cladding or coaxial optical fibre which is being elongated, so that it becomes tapered over a portion of its length, the power transmitted through the fibre goes through a series of severe oscillations when the power drops to at least 20dB below its maximum level. This effect is illustrated in Figure 1 where the transmitted power is plotted against the amount of elongation of the fibre.

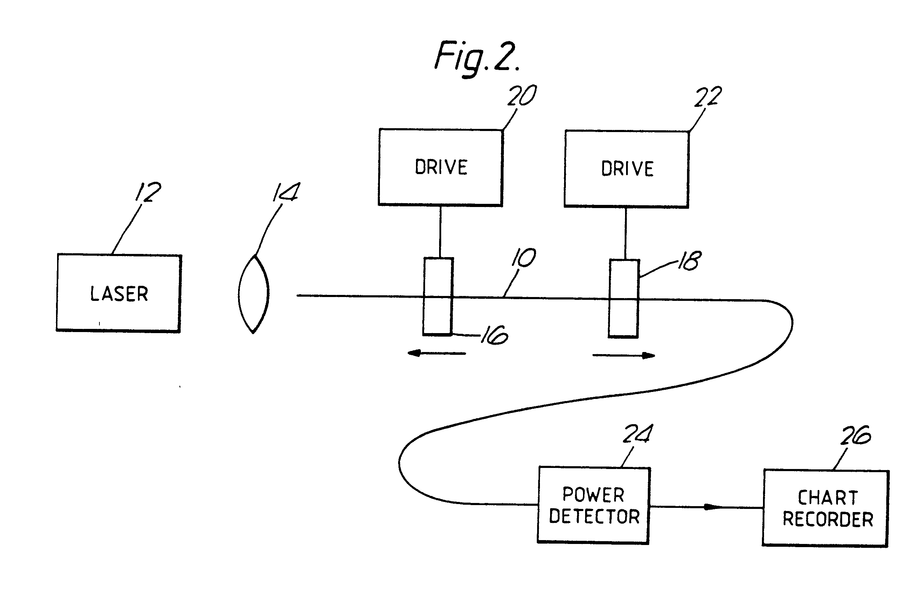

Figure 2 illustrates the apparatus used for producing the taper in a fibre 10.

The apparatus comprises a laser light source producing radiation at a predetermined wavelength which is 1.5 micrometres for the purposes of the present example. This radiation is passed through a lens 14 to focus it onto the cleaved face of the core 2 of the fibre 10 so that light is propagated along the core of the fibre. Normally the fibre will be surrounded by an acrylate jacket which will strip any modes which start to propagate in the cladding waveguide of the fibre. If such a jacket is not provided the fibre may pass through a bath of index matching fluid which will prevent light propagation along the cladding waveguide.

The fibre 10 is clamped at two spaced points along its length by clamps 16 and 18. Each clamp is provided with a motorised driver 20, 22 to enable the clamps to be pulled away from each other to taper the portion of the fibre between them. The drives are precisely controlled so that fibre extension of the order of 1cm can be achieved and the extension

0211582

stopped at a desired point to an accuracy of less than 1mm. The clamps may be positioned vertically one above the other so that gravity can assist the tapering process. An epoxy-butane flame (not shown) is used to heat the fibre while the taper between the clamps is elongated.

Where the fibre is a depressed cladding fibre, the end of the fibre 10 is coupled to a power detector 24 which is connected to a chart recorder. If this is not the case then the power detection is provided by a microscope coupled to a vidicon camera. The power detector or microscope is focused so as to detect the power propagated along the core of the optical fibre 10. If the acrylate jacket does not strip modes propagating in the cladding waveguide, a further bath of index matching fluid is provided to avoid light propagating in the cladding waveguide affecting the power detector.

A typical plot produced on the chart recorder 26 is shown in Figure 1. The plot comprises a level section where a constant amount of power is being received. Thus the power launched from the laser into the core is being propagated along the core with little or no coupling of power into the cladding

0211582

waveguide. After this level section, the received power oscillates increasingly rapidly between a series of minima A, B, C where little power is being received through the core. These minima correspond to extensions of the fibre at which the tapered portion of the fibre 10 between the clamps 16, 18 is so dimensioned that there is complete energy coupling between the core and the cladding waveguides. The plot produced in Figure 1 has been shown for a considerable extension of the fibre between the clamps. However, in practice, to produce a filter, the drive to the clamps is stopped when the recorder reaches one of the minimum A, B, C or a desired intermediate point depending on the required wavelength transmission characteristic of the filter.

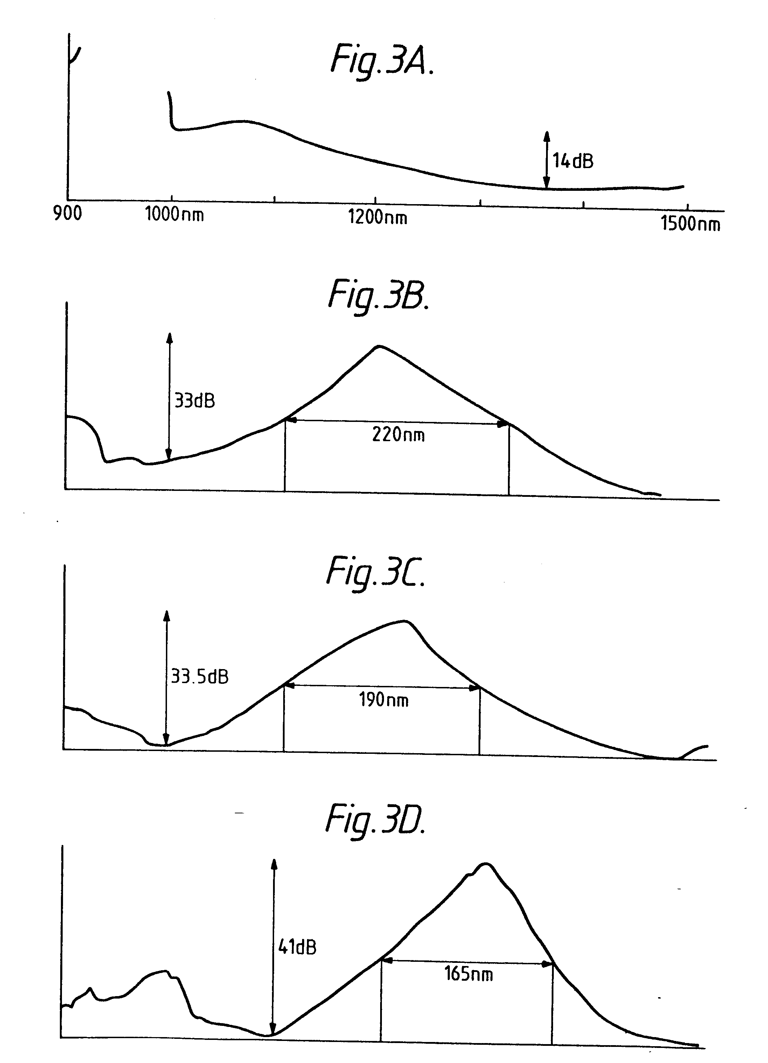

Figure 3 shows plots of the wavelength transmission characteristics in which power transmitted is plotted against wavelength for optical fibre filters produced by stopping the taper at various extensions when laser light of 1.5 micrometres is being propagated along the fibre core.

Figure 3A shows the transmission characteristic of the filter produced by stopping the taper at the point marked A on Figure 1. In this transmission characteristic the maximum to minimum transmission points are separated by 280 nanometres and the modulation depth is at least 14dB.

The transmission characteristic illustrated in Figure 3B is produced as a result of stopping the extension approximately at the point marked B in Figure 1. In this transmission characteristic the full oscillation is clear. The pass band is now 220 nanometres wide and at least 33dB modulation is present.

By extending the taper to the point marked C in Figure 1 the iflter has a pass band of 190 nanometres which is 33.5dB deep.

Similarly, when the taper is stopped at the point marked D on Figure 1, the pass band is reduced to 165 nanometres with a modulation depth of 41dB.

If the taper is extended to the twentieth minimum then a pass band of 35 nanometres is produced with 16.6dB modulation. It is therefore clear that the longer the taper produced the narrower the pass band of the filter. The wavelength transmission characteristics of the filter are considerably reshaped relative to the response of the untapered optical fibre.

Optical fibre filters with different characteristics can be produced in dependence on the point on the power/elongation curve at which tapering is stopped, and on the value of the single wavelength used to generate the curve. Where the taper is stopped at a minimum, the resulting filter will normally block radiation of the single wavelength used to produce the curve; this is because at a minimum of the power/elongation curve energy at that wavelength is coupled to the tubular cladding waveguide. If elongation is stopped at a maximum, the single wavelength will be within the pass band.

Optical filters produced by the described method can readily be incorporated into an optical fibre system where they will filter out wavelengths outside the pass band and transmit the filtered energy through the optical fibre system with minimum loss.

It will, however, be observed that, when forming a taper, it may not be necessary to stop exactly at a minimum or a maximum, the allowable degree of departure therefrom depending on the required application of the filter in any particular case.

0211582

## CLAIMS

1. A method of producing an optical fibre filter comprising the steps of launching light energy of a single wavelength into an optical fibre, elongating portion of the fibre while monitoring the power transmitted therethrough, and stopping the elongating process at a selected point of the transmitted power/elongation curve.

2. A method as claimed in Claim 1, for producing a band pass filter, wherein the selected point is approximately a minimum of the power elongation curve.

3. A method as claimed in Claim 2, comprising the step of selecting the particular minimum to produce the required pass band.

4. Apparatus for producing an optical fibre filter, comprising a laser source producing radiation at a single wavelength for propagation along an optical fibre, means for elongating a portion of the fibre, means for monitoring the power transmitted along the fibre through the elongated portion, and means for controlling the elongating means in response to the output of the power monitoring means to stop the elongation at a predetermined point in the relationship between power and elongation.

5.    Apparatus as claimed in Claim 4, wherein said elongating means comprises holding means for holding the fibre at two spaced points, and means driving the holding means relatively apart.

Fig.1.

POWER

20dB

A B C D

EXTENSION

0211582

Fig. 2.

0211582

## Fig.3A.

14dB

900    1000nm    1200nm    1500nm

## Fig.3B.

33dB

220nm

## Fig.3C.

33.5dB

190nm

## Fig.3D.

41dB

165nm